# EUROPÄISCHE PATENTANMELDUNG

(11) **EP 2 037 294 A2**
(43) Veröffentlichungstag der Anmeldung: **18.03.2009**
(21) Anmeldenummer: 08104757.3
(22) Anmeldetag: 15.07.2008
(51) Int. Cl.: G01S 17/08, G01S 17/87, G01C 15/00, G01S 7/481, G01S 7/51

(54) **Messvorrichtung**

(30) Priorität: 12.09.2007 DE 102007043496
(71) Anmelder: ROBERT BOSCH GMBH, 70442 Stuttgart (DE)
(72) Erfinder: Tiede, Steffen, 71083 Herrenberg (DE); Wuensch, Steffen, 71088 Holzgerlingen (DE)

(57) **Zusammenfassung**

Die Erfindung betrifft Messvorrichtung (1) mit ersten elektrooptischen Messmitteln (3) zur Bestimmung einer ersten Distanz zwischen einem Referenzpunkt der Messvorrichtung (1) und einem ersten Zielort in einer ersten Messrichtung (4). Erfindungsgemäß ist vorgesehen, dass zweite elektrooptische Messmittel (10) zur Bestimmung einer zweiten Distanz zwischen dem Referenzpunkt der Messvorrichtung (1) und einem zweiten Zielort in einer zweiten, mit der ersten Messrichtung (4) einen Winkel α aufspannenden Messrichtung (13), vorgesehen sind.

## Beschreibung

### Stand der Technik

Die Erfindung betrifft eine Messvorrichtung gemäß dem Oberbegriff des Anspruchs 1.

Bekannt sind elektrooptische Messvorrichtungen, mittels denen das Ausmessen von Abständen zwischen zwei Gegenständen möglich ist. Die bekannten elektrooptischen Messvorrichtungen arbeiten mit einem Laserstrahl als Messsignal, wobei der Abstand zwischen einem Bezugspunkt der Messvorrichtung und einem Zielort durch die Messung der Laufzeit eines ausgesendeten und an dem Zielort reflektierten Messsignals bestimmt wird. Das Messergebnis wird sodann auf einem Display angezeigt. Nachteilig bei den bekannten elektrooptischen Messvorrichtungen ist es, dass mit diesen lediglich Messungen in jeweils einer einzigen Messrichtung vorgenommen werden müssen. Soll beispielsweise an einer definierten Stelle an einer Wand ein Bild aufgehängt werden, muss zunächst die Distanz in einer X-Richtung und daraufhin in einer im 90°-Winkel zur X-Richtung verlaufenden Y-Richtung gemessen werden, um den gewünschten Aufhängepunkt exakt zu bestimmen.

### Offenbarung der Erfindung

### Technische Aufgabe

Der Erfindung liegt die Aufgabe zugrunde, eine Messvorrichtung vorzuschlagen, mit der auf einfache Weise Messungen in zwei Messrichtungen vorgenommen werden können.

### Technische Lösung

Diese Aufgabe wird mit einer Messvorrichtung mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, in einer einzigen Messvorrichtung zwei elektrooptische Messmittel vorzusehen, die derart ausgebildet und/oder angeordnet sind, dass mit diesen in zwei unterschiedlichen Messrichtungen, die unter einem Winkel α zueinander verlaufen, jeweils eine Distanz zu einem in der jeweiligen Messrichtung liegenden Zielort messbar ist. Beträgt der Winkel zwischen den beiden Messrichtungen, also der Winkel zwischen den von den Messmitteln ausgesendeten punkt- oder linienförmigen Messstrahlen, insbesondere Laserstrahlen, 90°, können mit einer nach dem Konzept der Erfindung ausgebildeten Messvorrichtung die X-/Y-Koordinaten eines definierten Punktes in einer Messebene, beispielsweise einer Wand, bestimmt werden.

Jedes elektrooptische Messmittel umfasst bevorzugt eine Signalerzeugungseinheit, insbesondere eine Laserstrahlquelle, wobei es auch denkbar ist, eine gemeinsame Laserstrahlquelle zu nutzen und den erzeugten Laserstrahl über eine geeignete Optik in die beiden Messrichtungen aufzuspalten. Weiterhin umfassen die Messmittel mit Vorteil jeweils eine Optik und einen Sensor zum Empfangen des an dem jeweiligen Zielort reflektierten Messsignals sowie eine Auswerteeinheit zur Bestimmung der jeweiligen Distanz, beispielsweise auf Basis einer Laufzeitmessung. Es liegt im Rahmen der Erfindung, dass jedem elektrooptischen Messmittel ein eigenes Display zugeordnet ist oder dass die beiden Messergebnisse auf einem gemeinsamen Display angezeigt werden.

Optional können bei der vorgeschlagenen Messvorrichtung folgende Optionen realisiert werden: Ausführen von Rechenoperationen, wie Addieren und/oder Subtrahieren von Teilmessstrecken; Umschalten auf ein anderes Längenmesssystem, beispielsweise auf Inch; Umschalten von einem Dauermessmodus (kontinuierliche Messungen) in einen Einzelmessmodus; Vorsehen einer Möglichkeit zur Einstellung der Reaktionsempfindlichkeit der Signalaufnahme und/oder Vorsehen einer Einstellmöglichkeit für die Anzeigegenauigkeit.

Von besonderem Vorteil ist eine Ausführungsform der Messvorrichtung, bei der der Winkel zwischen den Messrichtungen kein voreingestellter, fester Winkel ist, sondern bei der der Winkel zwischen den Messrichtungen in Abhängigkeit der Messaufgabe einstellbar ist. Vorzugsweise ist der Winkel zwischen den Messrichtungen zwischen 0° und 360° einstellbar. Eine Begrenzung der Einstellbarkeit auf einen Winkelbereich zwischen 0° und 180° oder zwischen 0° und 90° ist ebenfalls denkbar.

Die Einstellbarkeit des Winkels zwischen den beiden Messvorrichtungen kann beispielsweise dadurch vorgenommen werden, dass die beiden elektrooptischen Mittel relativ zueinander um eine gemeinsame Drehachse verschwenkbar sind. Bevorzugt liegt der gemeinsame Referenzpunkt der elektrooptischen Messmittel auf dieser Drehachse bzw. wird von dieser gebildet.

Von besonderem Vorteil ist eine Ausführungsform, bei der der Winkel, der zwischen den beiden Messrichtungen eingestellt ist, bestimmt und angezeigt werden kann. In einer einfachsten Variante ist hierzu eine Skala vorgesehen, auf der der jeweils eingestellte Winkel zwischen den Messrichtungen ablesbar ist. Von besonderem Vorteil ist jedoch eine Ausführungsform, bei der der Winkel zwischen den Messrichtungen elektronisch auf einem Display, insbesondere als Zahlenwert angezeigt wird. Eine derart ausgebildete Messvorrichtung umfasst mit Vorteil einen Winkelsensor zur Bestimmung des Winkels zwischen den Messvorrichtungen, wobei der Winkelsensor, insbesondere über eine Auswerteeinheit, mit einem Display verbunden ist, wobei es im Rahmen der Erfindung liegt, zur Anzeige des Winkels ein eigenes Display vorzusehen oder aber den Winkel auf dem mindestens einen Display zur Anzeige der Distanzwerte anzuzeigen. Als Winkelsensor können beispielsweise an sich bekannte Winkelschrittgeber, Winkelencoder, Winkelkodierer oder Drehpotentiometer eingesetzt werden.

Durch die Kombination zweier in unterschiedliche Messrichtungen messender Messmittel mit Mitteln zur Bestimmung und Anzeige des Winkels zwischen den Messrichtungen wird eine Messvorrichtung erhalten, die die Vorteile einer elektrooptischen Distanzmessvorrichtung mit einer Winkelmessvorrichtung kombiniert. Im Gegensatz zu rein mechanisch arbeitenden Winkelmessvorrichtungen können mit der vorgeschlagenen Messvorrichtung Winkel über große Distanzen exakt bestimmt werden, wobei gleichzeitig die Distanz zu den zwei beabstandeten Zielorten messbar ist, so dass die Koordinaten beliebiger Punkte in einer Messebene exakt bestimmbar sind.

Zur Durchführung exakter Distanzmessungen in zwei Richtungen ist eine Ausführungsform von Vorteil, bei der die beiden elektrooptischen Mittel zur Distanzmessung in zwei Messrichtungen relativ zueinander fixierbar sind. Dabei ist es denkbar, Fixiermöglichkeiten nur in definierten Winkel-schritten vorzusehen, oder die Fixiermittel derart auszubilden, dass die elektrooptischen Mittel in frei wählbaren Winkelpositionen relativ zueinander fixierbar sind.

Um vorgegebene Distanzen, insbesondere in einem vorgegebenen Winkel, einstellen zu können, ist eine Ausführungsform der Messvorrichtung von Vorteil, bei der die einzustellenden Distanzen und/oder ein einzustellender Winkel vorgebbar sind. Beispielsweise kann die Eingabe dieser Werte über mindestens eine Taste oder bevorzugt über eine Touchscreen-Einheit eingegeben, d.h. vorgegeben, werden. Zum raschen Auffinden der vorgegebenen Distanzen sind als Orientierungshilfe Signalisierungsmittel zur Anzeige der Verstellrichtungen vorgesehen, in die die Messvorrichtung verstellt werden muss, damit die gewünschte Zielposition zur Übertragung dieser Position auf eine Messfläche gefunden werden kann. Zusätzlich oder alternativ können auch Mittel zur Signalisierung der Verstellrichtung der elektrooptischen Messmittel relativ zueinander, also zur Anzeige der notwendigen Verschwenkrichtung, vorgesehen werden, um den vorgegebenen Winkel erleichtert einstellen zu können. Zur Ausbildung der Signalisierungsmittel gibt es unterschiedliche Möglichkeiten. Beispielsweise ist es denkbar, die Verstellrichtungen bzw. die Schwenkrichtungen durch blinkende oder dauerhaft leuchtende Pfeile, insbesondere auf einem Display, anzuzeigen. Zusätzlich oder alternativ können auch akustische Signalisierungsmittel vorgesehen werden, wobei die Verstellrichtungen bzw. die Verschwenkrichtungen durch unterschiedliche Tonhöhen und Tonfolgefrequenzen angezeigt werden. Wird die Messvorrichtung über die Sollwerte oder den Sollwert hinausbewegt, so ist es vorteilhaft, wenn die Signalisierungsmittel derart ausgebildet sind, dass sie die vorzunehmende Richtungskorrektur anzeigen. Das Erreichen der Sollwerte bzw. des Sollwertes kann geeignet beispielsweise durch Aufleuchten zweier Pfeile oder durch Aufleuchten separater Signalanzeigen oder durch einen bestimmten Ton signalisiert werden. Ist durch Verschieben der Messvorrichtung die gewünschte Position, also der gewünschte Messpunkt, ermittelt, so kann dieser beispielsweise mittels eines vorzusehenden Fadenkreuzes, beispielsweise an einer zentralen Stelle der Messvorrichtung, mit einem geeigneten Stift auf die Messebene übertragen werden. Anstelle der von Hand aufzuzeichnenden Position können auch geeignete Druckstempel oder eine Markierung mittels Laserlicht vorgesehen werden.

Eine erste Alternative zur Realisierung der Einstellbarkeit des Winkels zwischen den Messrichtungen besteht darin, für jedes elektrooptische Messmittel ein ringförmiges Gehäuse vorzusehen, und diese Gehäuse derart anzuordnen, dass sie um eine gemeinsame, zentrische Drehachse relativ zueinander verdrehbar sind. Der gemeinsame Bezugspunkt der elektrooptischen Messmittel liegt dabei bevorzugt in der Drehachse.

Eine zweite Alternative zur Realisierung einer Einstellbarkeit des Winkels zwischen den beiden Messrichtungen besteht darin, jedes elektrooptische Messmittel in einem Schwenkarm anzuordnen, wobei die beiden Arme relativ zueinander um eine gemeinsame Drehachse, in der bevorzugt auch der gemeinsame Bezugspunkt der elektrooptischen Messmittel liegt, verschwenkbar sind.

Von besonderem Vorteil ist eine Ausführungsform, bei der Mittel zur Anzeige der Relativlage der Messvorrichtung zur Vertikalen und/oder zur Horizontalen vorgesehen sind. Bevorzugt können diese Mittel mindestens eine Libelle umfassen, anhand derer die Messvorrichtung horizontal oder vertikal ausrichtbar ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine Draufsicht auf ein erstes Ausführungsbeispiel einer Messvorrichtung,
- Fig. 2:: eine Schnittansicht durch die Messvorrichtung gemäß Fig. 1 bei in zwei entgegengesetzte Messrichtungen weisenden Messmitteln,
- Fig. 3:: ein Anwendungsbeispiel der Messvorrichtung gemäß den Fig. 1 und 2,
- Fig. 4:: eine alternativ ausgebildete Messvorrichtung.

### Ausführungsformen der Erfindung

In den Figuren sind gleiche Bauteile und Bauteile mit der gleichen Funktion mit den gleichen Bezugszeichen gekennzeichnet.

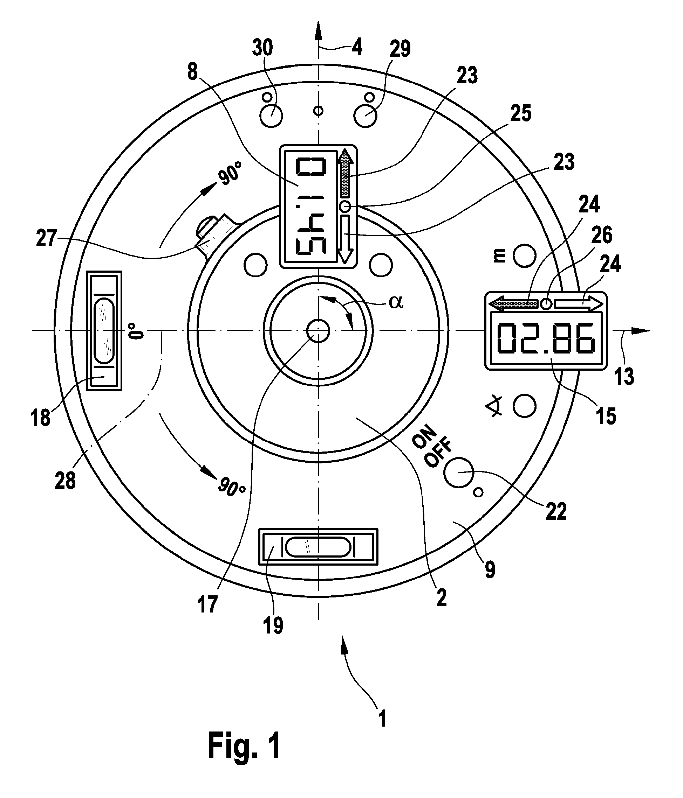

In Fig. 1 ist eine Messvorrichtung 1 gezeigt. Diese umfasst einen ringförmigen, radial inneren ersten Ringkörper 2 mit ersten elektrooptischen Messmitteln 3 zur berührungslosen Distanzmessung in einer ersten Messrichtung 4. Die elektrooptischen Messmittel 3 umfassen eine Laserstrahlquelle 5 mit einer zugehörigen ersten Optik 6 sowie einen nicht gezeigten Empfangssensor und eine erste Verarbeitungs- und Auswerteeinheit 7. Letztere ist signalleitend mit einem ersten Display 8 verbunden.

Ferner umfasst die Messvorrichtung 1 einen zweiten Ringkörper 9 (Gehäuse), der axial benachbart zu dem ersten Ringkörper 2 angeordnet ist und diesen in radialer Richtung überragt. Alternativ ist es denkbar, die beiden Ringkörper 2, 9 ineinander zu verschachteln.

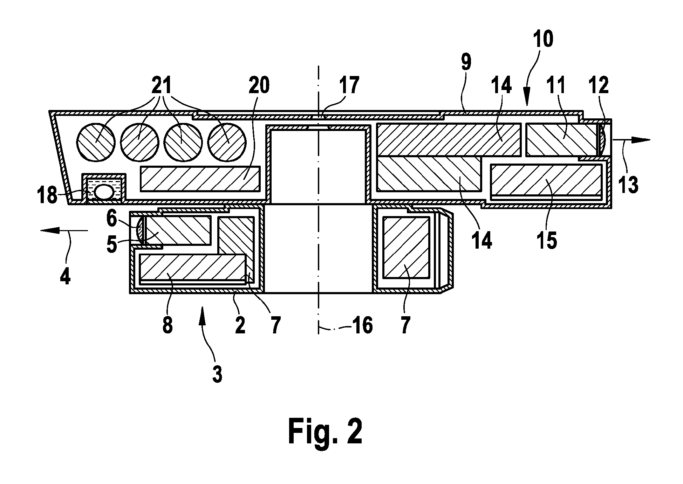

In dem zweiten Ringkörper 9 sind zweite elektrooptische Messmittel 10 angeordnet, die im Wesentlichen genauso aufgebaut sind wie die ersten elektrooptischen Messmittel 3. Die zweiten elektrooptischen Messmittel 10 umfassen eine zweite Laserstrahlquelle 11 mit einer zugehörigen zweiten Optik 12. Mittels der zweiten Laserstrahlquelle 11 kann ein Laserstrahl (Messsignal) in einer zweiten Messrichtung 13 erzeugt werden. In Fig. 1 sind die Messrichtungen 4, 13 in einem Winkel α von 90° zueinander angeordnet. In Fig. 2 beträgt der Winkel α 180°.

Ferner umfassen die zweiten elektrooptischen Messmittel 10 eine zweite Verarbeitungs- und Auswerteeinrichtung 14, die das Messergebnis auf einem zweiten Display 15 anzeigt. Alternativ ist es denkbar, eine gemeinsame Verarbeitungs- und Auswerteeinheit und/oder ein gemeinsames Display vorzusehen. Auch ist es denkbar, eine gemeinsame Laserstrahlquelle mit einer geeigneten Optik zur Aufspaltung des erzeugten Laserstrahls in zwei Messrichtungen vorzusehen.

Die beiden Ringkörper 2, 9 mit ihren jeweiligen fest darin angeordneten elektrooptischen Messmitteln 3, 10 können relativ zueinander um eine Drehachse 16, die zentrisch durch die Ringkörper 2, 9 verläuft, verschwenkt werden. Diese gedachte Drehachse 16 bildet gleichzeitig den gemeinsamen Bezugspunkt, zu dem mittels der elektrooptischen Messmittel 3, 10 eine Distanz zu einem jeweils in einer Messrichtung 4, 13 liegenden Zielort in an sich bekannter Weise messbar ist.

Zu erkennen ist eine zentrische Öffnung 17 im zweiten Ringkörper 9, die von der gedachten Drehachse 16 zentrisch durchsetzt ist. Durch diese Öffnung 17 hindurch kann ein gefundener Messpunkt, beispielsweise mittels eines Stiftes, auf eine Messebene aufgezeichnet werden.

Ferner umfasst die Messvorrichtung 1 zwei um 90° zueinander versetzte, auf dem zweiten Ringkörper 9 angeordnete, als Libellen ausgebildete Mittel 18, 19 zur Ausrichtung der Messvorrichtung 1 in einer Messebene.

Wie insbesondere aus Fig. 2 zu erkennen ist, umfasst die Messvorrichtung 1 Mittel 20 zur Bestimmung des Winkels α zwischen den Messrichtungen 4, 13, wobei das Messergebnis auf dem ersten Display 8 anzeigbar ist. In dem gezeigten Ausführungsbeispiel arbeiten die Mittel 20 mit einem als Absolutwertgeber ausgebildeten Winkelsensor.

Aus Fig. 2 sind weiterhin nebeneinander angeordnete Akkumulatoren 21 zum Betreiben der elektrooptischen Messmittel 3, 10 sowie der Mittel 20 zur Bestimmung des Winkels α vorgesehen.

Wie aus Fig. 1 ersichtlich ist, umfasst die Messvorrichtung einen Ein- und Ausschaltknopf 22. Ferner sind die Displays 8, 15 als Touchscreen-Displays zur Eingabe einzustellender Distanzen und Winkel ausgebildet.

In den Displays 8, 15 sind als Pfeile ausgebildete Mittel 23, 24 zur Signalisierung der Verstellrichtung vorgesehen, in der die Messvorrichtung 1 bewegt werden muss, damit sich die Öffnung 17 exakt über den einzustellenden Koordinaten befindet, die dann durch die Öffnung 17 auf der Messebene markierbar sind. Ferner sind Mittel 25, 26 zur Signalisierung des Erreichens der Zielposition vorgesehen. Diese sind in dem gezeigten Ausführungsbeispiel als zwischen den Pfeilen angeordnete LEDs ausgebildet.

In Fig. 1 ist eine Fixiereinrichtung 27 (Rasteinrichtung) angedeutet, mit der die beiden Ringkörper 2, 9 relativ zueinander in 90°-Winkel-Schritten fixiert werden können.

Im Folgenden werden mögliche Anwendungsbeispiele erläutert.

Sollen beispielsweise die X-/Y-Koordinaten eines Punktes auf einer Messebene bestimmt werden, also beispielsweise der Abstand des Messpunktes zu einer Wand und zum Boden, wird die Messvorrichtung 1 zunächst durch Bestätigen des Ein- und Ausschaltknopfes 22 aktiviert und die Fixiereinrichtung 27 gelöst, so dass die elektrooptischen Messmittel 3, 10 relativ zueinander verschwenkt werden können. Nach Einstellen eines Winkels von 90° werden die Ringkörper 2, 9 mittels der Fixiereinrichtung relativ zueinander fixiert, und die Messvorrichtung 1 wird auf die Messstelle aufgesetzt, so dass sich diese zentrisch innerhalb der Öffnung 17, also in einem Fadenkreuz 28, befindet. Mit Hilfe der Mittel 19 (Libelle) erfolgt nun eine Ausrichtung der Messvorrichtung 1, woraufhin mittels eines Knopfes 29 die Messart, nämlich in diesem Fall Einzelmessung, eingestellt werden kann. Mit einem weiteren Knopf 30 kann auf kontinuierliche Dauermessung umgestellt werden. In den Displays 8, 15 wird das erhaltene Messergebnis angezeigt. Gleichzeitig wird in dem Display 8 der eingestellte 90° Winkel zwischen den Messrichtungen 4, 13 angezeigt.

Bei einem anderen Anwendungsbeispiel soll ein Loch mit festgelegten Abständen zu einer linken Seitenwand und zur Decke gebohrt werden. Hierzu ist ein zu ermittelnder Messpunkt auf die Messebene (Wand) zu übertragen. Vor der Ausführung der Messung wird zunächst ein Winkel von 90° zwischen den Messrichtungen 3, 10 eingestellt. Daraufhin werden die Koordinaten des Messpunktes durch Betätigen der als Touchscreen-Displays ausgebildeten Displays 8, 15 eingegeben. Im Anschluss an eine grobe Schätzung der Lage des Messpunktes auf der Messebene wird dann das Messgerät mit seiner Basisfläche auf die Arbeitswand gebracht. Nach dem senkrechten Ausrichten mit Hilfe der Mittel 19 (Libelle) erfolgt nach vorheriger Betätigung des Knopfes 30 die Distanzmessung in den unterschiedlichen Messrichtungen 4, 13. Die Mittel 23, 24 zur Signalisierung der Verstellrichtung geben dabei die Verstellrichtungen an, in denen die Messvorrichtung relativ zu den Zielorten (Seitenwand und Decke) verstellt werden muss. Hat die Bedienperson die Sollposition erreicht, zeigen die Mittel 25, 26 zur Signalisierung das Erreichen durch ein optisches Signal an. Zusätzlich ertönt ein Tonsignal.

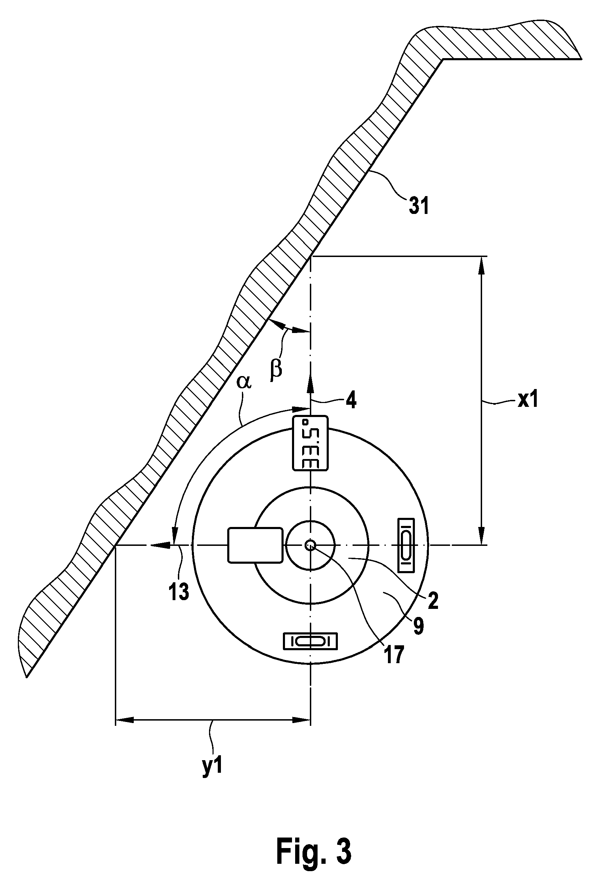

Ein weiteres Ausführungsbeispiel wird im Folgenden anhand von Fig. 3 erläutert. Soll z.B. eine Dachschräge 31 exakt vermessen werden, werden die Ringkörper 2, 9 derart zueinander verdreht, dass ein Winkel α zwischen den Messrichtungen 4, 13 von 90° resultiert. Daraufhin werden die Distanzen x1 und y1 in die Messrichtungen 4, 13 gemessen. Ein Winkel β zwischen der Dachschräge 31 und der Senkrechten (hier: Messrichtung 4) kann über eine Tangens-Funktion aus den beiden im rechten Winkel aufeinanderstehenden Strecken x1 und y1 berechnet und auf einem der Displays angezeigt werden.

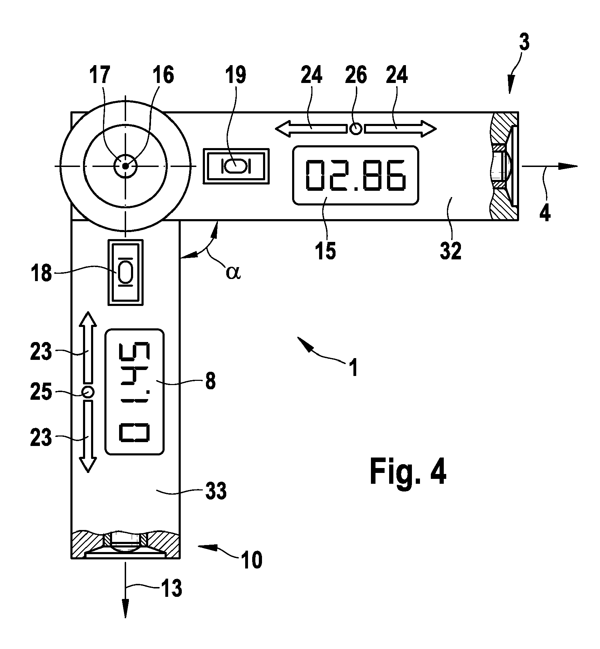

In Fig. 4 ist eine alternative Messvorrichtung 1 gezeigt. Die elektrooptischen Messmittel 3, 10 sind in jeweils einem Arm 32, 33 angeordnet, wobei die Arme 32, 33 relativ zueinander um eine Drehachse 16 verschwenkbar sind. Die Drehachse 16 bildet den gemeinsamen Bezugspunkt der Messvorrichtung 1. Zum Übertragen eines Messpunktes ist im Schwenkbereich eine Öffnung 17 vorgesehen, durch die zentrisch die Drehachse 16 und somit der Bezugspunkt verläuft.

Die Funktionsweise der Messvorrichtung 1 gemäß Fig. 4 entspricht im Wesentlichen der Funktion der Messvorrichtung 1 gemäß den Fig. 1 bis 3. Der Winkel α zwischen den Messrichtungen 4, 13 kann durch Verschwenken der Arme 32, 33 relativ zueinander um die Drehachse 16 eingestellt werden. Die Messvorrichtung 1 gemäß Fig. 4 weist zwei als Touchscreen-Displays ausgebildete Displays 8, 15 sowie zwei Libellen 18, 19 zur Ausrichtung der Messvorrichtung 1 auf. Ferner sind Mittel 23, 24 zur Signalisierung von Verstellrichtungen vorgesehen, sowie Mittel 25, 26 zur Signalisierung des Erreichens eines voreingestellten Messpunktes.

In einer 180° Lage der Arme 32, 33 zueinander kann die Messvorrichtung 1 gemäß Fig. 4 zusätzlich als Lineal genutzt werden.

## Patentansprüche

1. Messvorrichtung mit ersten elektrooptischen Messmitteln (3) zur Bestimmung einer ersten Distanz zwischen einem Referenzpunkt der Messvorrichtung (1) und einem ersten Zielort in einer ersten Messrichtung (4),
**dadurch gekennzeichnet,**
**dass** zweite elektrooptische Messmittel (10) zur Bestimmung einer zweiten Distanz zwischen dem Referenzpunkt der Messvorrichtung (1) und einem zweiten Zielort in einer zweiten, mit der ersten Messrichtung (4) einen Winkel α aufspannenden Messrichtung (13) vorgesehen sind.

2. Messvorrichtung nach Anspruch 1,
**dadurch gekennzeichnet,**
**dass** der Winkel α zwischen den Messrichtungen (4, 13) einstellbar ist.

3. Messvorrichtung nach einem der Ansprüche 1 oder 2,
**dadurch gekennzeichnet,**
**dass** die ersten elektrooptischen Mittel (3) und die zweiten elektrooptischen Mittel (10) relativ zueinander um eine, insbesondere den Referenzpunkt durchsetzende, Drehachse (16) verschwenkbar sind.

4. Messvorrichtung nach einem der vorhergehenden Ansprüche,
**dadurch gekennzeichnet,**
**dass** Mittel (20) zur Bestimmung und Anzeige des Winkels α vorgesehen sind.

5. Messvorrichtung nach Anspruch 4,
**dadurch gekennzeichnet,**
**dass** die Mittel (20) zur Bestimmung und Anzeige des Winkels α einen mit einem Display (8, 15) zusammenwirkenden Winkelsensor umfassen und/oder eine Winkelskala aufweisen.

6. Messvorrichtung nach einem der Ansprüche 3 bis 5,
**dadurch gekennzeichnet,**
**dass** die ersten und die zweiten elektrooptischen Mittel (3, 10) in definierten und/oder frei wählbaren Winkelpositionen relativ zueinander fixierbar sind.

7. Messvorrichtung nach einem der vorhergehenden Ansprüche,
**dadurch gekennzeichnet,**
**dass** erste Mittel (23) zur Signalisierung einer ersten Verstellrichtung vorgesehen sind, in die die Messvorrichtung (1) relativ zu dem ersten Zielort zum Einstellen der vorgebbaren ersten Distanz verstellt werden muss und/oder das zweite Mittel (24) zur Signalisierung einer zweiten Verstellrichtung vorgesehen sind, in die die Messvorrichtung (1) relativ zu dem zweiten Zielort zum Einstellen der vorgebbaren zweiten Distanz verstellt werden muss, und/oder dass Mittel zur Signalisierung der Schwenkrichtung vorgesehen sind, in der die elektrooptischen Messmittel (3, 10) relativ zueinander zum Einstellen des vorgebbaren Winkels α verschwenkt werden müssen.

8. Messvorrichtung nach einem der vorhergehenden Ansprüche,
**dadurch gekennzeichnet,**
**dass** die ersten elektrooptischen Messmittel (3) in einem ersten Ringkörper (2) und die zweiten elektrooptischen Messmittel (10) in einem koaxial zu dem ersten Ringkörper (2) angeordneten, relativ zu dem ersten Ringkörper (2) verdrehbaren zweiten Ringkörper (9) angeordnet sind.

9. Messvorrichtung nach einem der Ansprüche 1 bis 7,
**dadurch gekennzeichnet,**
**dass** die ersten elektrooptischen Messmittel (3) in einem sich in die erste Messrichtung (4) erstreckenden Arm (32) und die zweiten elektrooptischen Messmittel (10) in einem relativ zu dem ersten Arm (32) verschwenkbaren, sich in die zweite Messrichtung (13) erstreckenden zweiten Arm (33) angeordnet sind.

10. Messvorrichtung nach einem der vorhergehenden Ansprüche,
**dadurch gekennzeichnet,**
**dass** Mittel (18, 19) zur Anzeige der Relativlage der Messvorrichtung zur Vertikalen und/oder zur Horizontalen vorgesehen sind.
